(19) Europäisches Patentamt
European Patent Office
Office européen des brevets

(11) **EP 2 222 802 B1**

(12) **EUROPEAN PATENT SPECIFICATION**

(45) Date of publication and mention
of the grant of the patent:
**22.05.2013 Bulletin 2013/21**

(51) Int Cl.:
***C09D 11/00*** *(2006.01)*

(21) Application number: **08863156.9**

(22) Date of filing: **01.10.2008**

(86) International application number:
**PCT/US2008/078352**

(87) International publication number:
**WO 2009/079070 (25.06.2009 Gazette 2009/26)**

(54) **AQUEOUS INKJET INK COMPRISING SELF-DISPSERSING PIGMENT**

WÄSSRIGE TINTENSTRAHLTINTE MIT SELBSTDISPERGIERENDEM PIGMENT

ENCRE AQUEUSE POUR JET D'ENCRE COMPRENANT UN PIGMENT AUTO-DISPERSANT

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **19.12.2007 US 8488 P**

(43) Date of publication of application:
**01.09.2010 Bulletin 2010/35**

(73) Proprietor: **E. I. du Pont de Nemours and Company
Wilmington, DE 19898 (US)**

(72) Inventor: **JACKSON, Christian
Wilmington
Delaware 19808 (US)**

(74) Representative: **Matthews, Derek Peter
Dehns
St Bride's House
10 Salisbury Square
London
EC4Y 8JD (GB)**

(56) References cited:
**EP-A- 1 473 338**

• **DATABASE WPI Week 200674 Thomson
Scientific, London, GB; AN 2006-711428
XP002505998 & JP 2006 247971 A (RICOH KK) 21
September 2006 (2006-09-21)**

• **DATABASE WPI Week 200640 Thomson
Scientific, London, GB; AN 2006-385208
XP002505999 & JP 2006 137072 A (RICOH KK) 1
June 2006 (2006-06-01)**

• **DATABASE WPI Week 200544 Thomson
Scientific, London, GB; AN 2005-429435
XP002506000 & JP 2005 144905 A (RICOH KK) 9
June 2005 (2005-06-09)**

• **DATABASE WPI Week 200453 Thomson
Scientific, London, GB; AN 2004-546659
XP002506001 & JP 2004 195706 A (RICOH KK) 15
July 2004 (2004-07-15)**

• **DATABASE WPI Week 200431 Thomson
Scientific, London, GB; AN 2004-333963
XP002506002 & JP 2004 043518 A (RICOH KK) 12
February 2004 (2004-02-12)**

EP 2 222 802 B1

**Description**

This application claims priority from U.S. Provisional Application Serial No. 60/008488 (filed December 19, 2007).

BACKGROUND OF THE INVENTION

The present invention pertains to an aqueous inkjet ink with pigment colorant and more particularly to an aqueous inkjet ink comprising anionic self-dispersing pigment, a certain cationic species and an aqueous vehicle comprising a certain humectant. The inventive inks exhibit favorable latency.

Inkjet printing is a non-impact printing process in which droplets of ink are deposited on a substrate, such as paper, to form the desired image. The droplets are ejected from a printhead in response to electrical signals generated by a microprocessor. Inkjet printers offer low cost, high quality printing and have become a popular alternative to other types of printers.

Inkjet printers are equipped with an ink set which, for full color printing, typically comprises a cyan, magenta and yellow ink (CMY). An ink set will also commonly comprise a black ink (CMYK). Colorants for the inks can be soluble in the ink vehicle (dyes) or insoluble (pigments).

An ink-jet ink is characterized by a number of necessary properties including color, jetability, decap time (latency), drying time and shelf-life, among others. However, there is often a tradeoff between these properties because improving one property can result in the deterioration of another property.

The decap time of the ink is the amount of time a printhead can be left uncapped and idle and still fire a drop properly - that is to say without misdirection, loss of color or unacceptable decrease of velocity. Decap is sometimes referred to in the art as "latency" and these two terms will be used interchangeably. Because not all the nozzles of the printhead fire all the time, a printer's service routine requires the idle nozzles to spit into a waste container (spittoon) on a regular basis to keep them fresh and avoid decap-related printing defects. It is preferable for an ink to have a long decap time so as to minimize the need for servicing which is wasteful of ink and slows print speeds. Inks with a very short decap time may not be printable without defects even with frequent servicing.

Pigment-based inks are advantageous over dye-based inks in that they tend to provide more water-fast and light-fast images. Also, with regard to black inks, carbon black pigment can provide much higher optical density than any available dye colorant.

Pigments, in order to be used in inks, must be stabilized to dispersion in the ink vehicle. Stabilization of the pigment can be accomplished by use of separate dispersing agents, such as polymeric dispersants or surfactants. Alternatively, a pigment surface can be chemically modified with dispersibility-imparting groups and thereby form a so-called "self-dispersible" or "self-dispersing" pigment (hereafter "SDP(s)") which is stable to dispersion without separate dispersant.

SDPs are often advantageous over traditional dispersant-stabilized pigments from the standpoint of greater stability and lower viscosity at the same pigment loading. This can provide greater formulation latitude in final ink.

The dispersibility-imparting groups on the surface of the SDP are typically ionizable groups such as carboxyl groups which, at neutral pH, are in the salt form associated with cationic counter-ions. The cationic counter-ions are typically alkali metal or (alkyl)ammonium cations.

The different salt forms of a given SDP can have somewhat different properties. For example, the lithium form of a self-dispersed pigment can have a number of benefits over the potassium and sodium forms such as greater ink stability, higher optical density and lower inter-color bleed. However, the lithium form tends to exhibit short decap times, making it difficult to work with commercially. Ink formulations providing longer decap time for SDP in lithium salt form would be advantageous.

U.S. Patent Application Publication No. 2005/0032930 discloses inkjet ink comprising anionic SDP with lithium counter-ions and anionic polymer with potassium counter-ions. U.S. Patent Application Publication No. 2005/0020730 also discloses inkjet ink comprising anionic SDP with lithium counter-ions and polymer, but the counter-ions associated with the polymer are unspecified.

U.S. Patent Application Publication Nos. 2004/0233263 and 2005/0087105 disclose aqueous inkjet ink formulations comprising Cab-O-Jet® 300 self-dispersing pigment and LiOH or LiCl additive.

U.S. Patent Application Publication Nos. 2007/0146454 and 2009/0020037. disclose inkjet ink comprising anionic SDP and a combination of lithium and other alkali metal cations.

U. S. Patent No. 6,069,190 and U.S. Patent Application Publication No. 2007/0040880 disclose inkjet ink formulations with SDP colorant that exhibit improved latency.

EP-A-1 473 338 and related Japanese applications JP 2006 247971, JP 2006 137072, JP 2005 144905, JP 2004 195706 and JP 2004 043518 all disclose inkjet inks. Lithium is included in lists of potential cations whilst caprolactam is included in lists of potential humectants. However, none of the documents discloses the specific combination of lithium and caprolactam.

There is still a need for, and it is an objective of this invention to provide, inkjet inks with enhanced decap properties comprising SDP and lithium counterions.

SUMMARY OF THE INVENTION

In accordance with an objective of the present invention, there is provided an inkjet ink comprising an aqueous vehicle, a colorant, and a first cationic species wherein: i) the aqueous vehicle comprises water and a first humectant consisting of caprolactam; ii) the colorant comprises self-dispersed pigment with anionic dispersibility-imparting surface groups; and, iii) the first cationic species consists of Lithium cations (Li+).

In one embodiment, the inkjet ink of the present invention further comprises a second humectant selected from any member or combination of members of the group consisting of ethylene glycol, diethylene glycol, triethylene glycol, glycerol, ethoxylated glycerol, 1,4-butanediol, 1,5-pentanediol and 2-pyrrolidone.

The inkjet ink of the present invention comprises caprolactam in an amount effective to substantially increase decap time of the ink compared to a control ink of similar composition, but with no caprolactam; the decap time being defined as the amount of time an inkjet printhead, loaded with said ink, can be left uncapped and idle and still fire a drop of that ink without misdirection, loss of color or unacceptable decrease of velocity. By the phrase "substantially increase decap time" is meant a significant increase in decap time of the ink, such as an increase of greater than 20% compared to the control ink. However, use of caprolactam as prescribed will typically at least double decap (100% increase), and commonly will increase the decap time 5-fold (500%) or more and even 10-fold (1000%) or more.

These and other features and advantages of the present invention will be more readily understood by those of ordinary skill in the art from a reading of the following detailed description. It is to be appreciated that certain features of the invention which are, for clarity, described above and below in the context of separate embodiments, may also be provided in combination in a single embodiment. Conversely, various features of the invention that are, for brevity, described in the context of a single embodiment, may also be provided separately or in any subcombination. In addition, references in the singular may also include the plural (for example, "a" and "an" may refer to one, or one or more) unless the context specifically states otherwise. Further, reference to values stated in ranges include each and every value within that range.

DETAILED DESCRIPTION OF THE PREFERRED EMBODIMENTS

The inkjet ink of the present invention, as well as inkjet inks in general, are comprised of vehicle, colorant and optionally other ingredients such as surfactants, binders, buffers, biocides and so forth. The ink vehicle is the liquid carrier (or medium) for the colorant and optional additives. The ink colorant refers to any and all species in the ink that provide color. The ink colorant can be a single colored species or a plurality of colored species collectively defining the final ink color.

Vehicle

The term "aqueous vehicle" refers to a vehicle comprised of water and one or more organic, water-soluble vehicle components commonly referred to as cosolvents or humectants. Sometimes in the art, when a co-solvent can assist in the penetration and drying of an ink on a printed substrate, it is referred to as a penetrant.

For convenience, these organic, water-soluble vehicle components will be collectively referred to as humectants. The aqueous vehicle typically will contain about 65 wt% to about 95 wt% water with the balance (i.e., about 35% to about 5%) being humectants. The amount of aqueous vehicle based on the total weight of ink is typically in the range of about 75 wt% to about 99.8 wt%.

As prescribed by the present invention, the aqueous vehicle comprises water and first humectant. This first humectant consists of caprolactam. The amount of first humectant in the final ink, is generally between about 1 wt % and about 35 wt% and more typically between about 2 wt % and about 30 wt%. In a preferred embodiment, the first humectant is present in the ink at levels in the range of about 4 wt% to about 25 wt%. Even more preferably, the first humectant level is greater than 5 wt%. The percentage of first humectant is weight percent based on the total weight of ink.

In one embodiment, the present invention comprises, in addition to the first humectant, a second humectant selected from any member or combination of members of the group consisting of ethylene glycol, diethylene glycol, triethylene glycol, glycerol, ethoxylated glycerol, 1,4-butanediol, 1,5-pentanediol and 2-pyrrolidone. The amount of second humectant, if present at all, is generally between about 1 wt% and about 25 wt% and more typically between about 2 wt% and about 20 wt%. The percentage of second humectant is weight percent based on the total weight of ink.

Colorant

Pigments, by definition, are substantially insoluble in an ink vehicle and must be treated in order to form a stable dispersion. An ink according to the present invention comprises self-dispersing pigment (SDP) colorant which term refers to pigment particles whose surface has been chemically modified with hydrophilic dispersibility-imparting groups that allow stable dispersion in an aqueous vehicle without separate dispersant. More particularly, in the present invention, the hydrophilic, dispersibility-imparting surface groups are anionic.

The SDPs may be prepared by grafting a functional group or a molecule containing a functional group onto the surface of the pigment, by physical treatment (such as vacuum plasma), or by chemical treatment (for example, oxidation with ozone, hypochlorous acid or the like). A single type or a plurality of types of hydrophilic functional groups may be bonded to one pigment particle.

The anionic moieties of the dispersibility-imparting groups are carboxylate or sulfonate groups which provide the SDP with a negative charge when dispersed in aqueous vehicle. The carboxylate or sulfonate groups are usually associated with monovalent and/or divalent cationic counter-ions.

Self-dispersing pigments are described, for example, in the following U. S. Patents: 5,571,311; 5,609,671; 5,968,243; 5,928,419; 6,323,257; 5,554,739; 5,672,198; 5,698,016; 5,718,746; 5,749,950; 5,803,959; 5,837,045; 5,846,307; 5,895,522; 5,922,118; 6,123,759; 6,221,142; 6,221,143; 6,281,267; 6,329,446; 6,332,919; 6,375,317; 6,287,374; 6,398,858; 6,402,825; 6,468,342; 6,503,311; 6,506,245 and 6,852,156.

Commercial sources of SDP include Cabot Corporation, Billerica, MA, USA, and Orient Corporation of America, Kenilworth, NJ, USA.

The amount of surface treatment (degree of functionalization) can vary. Advantageous (higher) optical density can be achieved when the degree of functionalization (the amount of hydrophilic groups present on the surface of the SDP per unit surface area) is less than about 3.5 $\mu$moles per square meter of pigment surface (3.5 $\mu$mol/m$^2$), more preferably less than about 3.0 $\mu$mol/m$^2$. Degrees of functionaliztion of less than about 1.8 $\mu$mol/m$^2$, and even less than about 1.5 $\mu$mol/m$^2$, are also suitable and may be preferred for certain specific types of SDPs.

Examples of pigments with coloristic properties useful in inkjet inks include: (cyan) Pigment Blue 15:3 and Pigment Blue 15:4; (magenta) Pigment Red 122 and Pigment Red 202; (yellow) Pigment Yellow 14, Pigment Yellow 74, Pigment Yellow 95, Pigment Yellow 110, Pigment Yellow 114, Pigment Yellow 128 and Pigment Yellow 155; (red) Pigment Orange 5, Pigment Orange 34, Pigment Orange 43, Pigment Orange 62, Pigment Red 17, Pigment Red 49:2, Pigment Red 112, Pigment Red 149, Pigment Red 177, Pigment Red 178, Pigment Red 188, Pigment Red 255 and Pigment Red 264; (green) Pigment Green 1, Pigment Green 2, Pigment Green 7 and Pigment Green 36; (blue) Pigment Blue 60, Pigment Violet 3, Pigment Violet 19, Pigment Violet 23, Pigment Violet 32, Pigment Violet 36 and Pigment Violet 38; and (black) carbon black. However, some of these pigments may be not be suitable for preparation as SDP and choice of colorant may be dictated by compatibility with a given surface treatment method. Colorants are referred to herein by their "C.I." designation established by Society Dyers and Colourists, Bradford, Yorkshire, UK and published in the The Color Index, Third Edition, 1971.

In a preferred embodiment, the anionic functional group(s) on the SDP surface are primarily carboxylate groups. Even more preferably the anionic dispersibility-imparting groups are directly attached to the pigment surface and are primarily carboxylate groups.

Preferred SDPs in which anionic dispersibility-imparting groups are directly attached to the pigment surface may be produced, for example, by a method described in U. S. Patent No. 6,852,156. Carbon black treated by the method described in this publication has a high surface active hydrogen content which is neutralized with base to provide very stable dispersions in water. Application of this method to colored pigments is also possible.

The levels of SDP employed in formulated inks are those levels that are typically needed to impart the desired optical density to the printed image. Typically, SDP levels are in the range of about 0.01 to about 10% by weight of the ink.

The ink colorant prescribed in the present invention must comprise SDP but may additionally comprise other colored species. In a preferred embodiment, the colorant consists essentially of SDP only, which is to say that effectively any and all colored species in the ink are self-dispersing pigments.

Other Ingredients (Additives)

Other ingredients, additives, may be formulated into the inkjet ink, to the extent that such other ingredients do not interfere with the stability and jettability of the ink, which may be readily determined by routine experimentation. Such other ingredients are in a general sense well known in the art.

Commonly, surfactants are added to the ink to adjust surface tension and wetting properties. Suitable surfactants include ethoxylated acetylene diols (e.g. Surfynols® series from Air Products), ethoxylated primary (e.g. Neodol® series from Shell) and secondary (e.g. Tergitol® series from Union Carbide) alcohols, sulfosuccinates (e.g. Aerosol® series from Cytec), organosilicones (e.g. Silwet® series from Witco) and fluoro surfactants (e.g. Zonyl® series from DuPont).

Surfactants are typically used in amounts up to about 5% and more typically in amounts of no more than 2%.

Inclusion of sequestering (or chelating) agents such as ethylenediaminetetraacetic acid (EDTA), iminodiacetic acid (IDA), ethylenediamine-di(o-hydroxyphenylacetic acid) (EDDHA), nitrilotriacetic acid (NTA), dihydroxyethylglycine (DHEG), trans-1,2- cyclohexanediaminetetraacetic acid (CyDTA), dethylenetriamine-N,N,N',N", N"-pentaacetic acid (DTPA), and glycoletherdiamine-N,N,N',N'-tetraacetic acid (GEDTA), and salts thereof, may be advantageous, for example, to eliminate deleterious effects of heavy metal impurities.

Biocides may be used to inhibit growth of microorganisms.

Polymers may be added to the ink to improve durability, or other properties. The polymers can be soluble in the vehicle or dispersed, and can be ionic or nonionic. Preferred anionic polymers are carboxyl groups-containing polymers having carboxylic acid groups (in the acid form or neutralized as "carboxylate") incorporated in the polymer. The polymer may contain other ionic or nonionic hydrophilic groups such as ether, hydroxyl and amide groups.

Soluble polymers may include linear homopolymers, copolymers or block polymers, they also can be structured polymers including graft or branched polymers, stars, dendrimers, etc. The dispersed polymers may include, for example, latexes and hydrosols. The polymers may be made by any known process including but not limited to free radical, group transfer, ionic, RAFT, condensation and other types of polymerization. They may be made by a solution, emulsion, or suspension polymerization process.

The soluble/dispersible carboxyl groups-containing polymer may include copolymers of acrylates, methacrylates, styrene, substituted styrene, $\alpha$-methylstyrene, substituted $\alpha$-methyl styrenes, vinyl naphthalenes, vinyl pyrrolidones, maleic anhydride, vinyl ethers, vinyl alcohols, vinyl alkyls, vinyl esters, vinyl ester/ethylene copolymers, acrylamides, and methacrylamides. The carboxyl groups-containing polymer may also be a polyester or polyurethane. Preferred classes of polymer additives include anionic acrylic, styrene-acrylic or polyurethane polymer.

When soluble polymer is present, the level is commonly between about 0.01 wt% and about 3 wt%, based on the total weight of ink. Upper limits are dictated by ink viscosity, or other physical limitations.

Cations

According to the present invention, an ink will contain a first cationic species (Li+). The ink may also contain other cations, such as other alkali metal cations. The molar concentration of first cationic species (Li+) per unit weight of ink is referred to as "M1". The total alkali metal molar concentration per unit weight of ink (Mtot) is the cumulative molar concentration of all alkali metals (Li, Na, K, Rb and Cs) present in the ink per unit weight of ink. To the extent that other alkali metal species are present, M1 is the predominate alkali species and thus M1 is half or more of Mtot (M1 $\geq$ 0.5Mtot).

The molar content of Li+ present (M1) is preferably a substantial fraction of M_anionic, the molar content of anionic groups on the self-dispersing pigment per unit weight of ink. M_anionic is a function of the amount of surface treatment per unit weight of pigment and the amount (weight percent) of self-dispersing pigment in the ink. Preferably M1 is at least one third of M-anionic, and more preferably one half or more of M_anionic.

Sodium is prevalent in the environment, and sodium cations may be detectable in an ink (at greater than 1 or 2 parts per million, for example) even when not deliberately added. The levels of other alkali metals, however, are typically nil (e.g. less than about 1 or 2 ppm) without deliberate addition.

The cations present in the pigmented inks can be measured by standard methods such as ion chromatography with a cation-exchange column (for example, a CS12A column from Dionex Corp., Sunnyvale, Calif.), and inductively coupled plasma optical emission spectroscopy (ICP/OES) with, for example, a commercially available instrument such as a PE Optima (Perkin Elmer Life and Analytical Sciences, Shelton, Conn.).

Prior to analysis, the pigment is removed from the ink by precipitating with the addition of hydrochloric acid. The precipitated pigment is separated by ultracentrifugation and the resulting clear supernatant is analyzed for cations.

Ink Properties

The surface tension and viscosity of the ink influence jetting properties such as drop velocity, separation length of the droplets, drop size and stream stability. Ink jet inks typically have a surface tension in the range of about 20 mN.m$^{-1}$ to about 50 mN.m$^{-1}$ at 25°C. Viscosity can be as high as 30 mPa.s at 25°C, but is typically in the range of about 1 mPa.s to about 20 mPa.s at 25°C. The ink physical properties are adjusted to the ejecting conditions and printhead design. The inks should have excellent storage stability for long periods to avoid clogging in an ink jet apparatus. Further, the ink should not corrode parts of the ink jet printing device it comes in contact with, and it should be essentially odorless and non-toxic. Preferred pH for the ink is in the range of from about 6 to about 8.

The various ink components can be combined in various proportions and combinations to make an ink with desired ink properties, as generally described herein above, and as generally recognized by those of ordinary skill in the art. Some experimentation may be necessary to optimize inks for a particular end use, but such optimization is generally within the ordinary skill in the art.

Method of Printing

Printing of the inks prescribed herein can be accomplished with any suitable inkjet printer. The substrate can be any suitable substrate including plain paper, such as common electrophotographic copier paper; treated paper, such as photo-quality inkjet paper; textile; and, non-porous substrates including polymeric films such as polyvinyl chloride and polyester.

EXAMPLES

Inks were prepared by stirring the indicated ingredients together and filtering the resulting mixture. Ingredient amounts are weight percent based on the total weight of ink, unless otherwise stated. Water was deionized, unless otherwise stated. Surfynol® 465 is a surfactant from Air Products. (Allentown, PA, USA). Glycereth 26 is a 26 mole ethoxylate of glycerol.

Dispersion 1 (Li)

Carbon black (S-160 from Degussa, surface area 150 m$^2$/g) was oxidized with ozone according to the process described in U.S. Patent No. 6,852,156 to create carboxylic acid groups directly attached to the carbon black pigment surface. Lithium hydroxide was used to neutralize the treated pigment and convert the surface acid groups to the Li salt form. The neutralized mixture was purified by ultra-filtration to remove free acids, salts, and contaminants. The purification process was performed to repeatedly wash pigment with de-ionized water until the conductivity of the mixture leveled off and remained relatively constant.

After recovery, dispersion 1 was a 17.4 weight percent dispersion of self-dispersing carbon black pigment (lithium form) with a viscosity of 3.5 mPa.s (25°C). The median particle size was about 110 nm.

Dispersion 2 (K)

Dispersion 2 was formed by converting dispersion 1 from the lithium to the potassium form using ion exchange resin. Dispersion 1 was first converted to the acid form by mixing with the ion exchange resin for an hour and then reneutralized with potassium hydroxide. This procedure was repeated three times. The final dispersion contained 14.9 weight percent pigment, 715 ppm potassium, 10 ppm sodium and no detectable lithium.

Dispersion 3 (K)

Carbon black (Nipex 180 from Degussa, surface area 260 m2/g) was oxidized with ozone according to U.S. Patent No. 6,852,156 as described herein before for dispersion 1, except that the neutralizing agent was potassium hydroxide.

After recovery, dispersion 3 was a 12.8 weight percent dispersion of self-dispersing carbon black pigment (potassium form) in water with a viscosity of 3.5 mPa.s (25°C). The median particle size was about 98 nm.

Dispersion 4 (Na)

Dispersion 4 was Cab-O-Jet® 300 which is a self-dispersing carbon black pigment from Cabot Corporation and, as received, is in sodium form and dispersed in water at about 15 weight percent pigment concentration.

Dispersion 5 (Li)

Dispersion 5 was formed by converting dispersion 4 from sodium to the lithium form using the ion exchange procedure described herein above for dispersion 2, except that the acid form of the dispersion was neutralized with lithium hydroxide. The final dispersion contained 13.5 weight percent pigment, 115 ppm lithium, 11 ppm sodium and no detectable potassium.

Polymer 1

Polymer 1 was a block copolymer with methacrylic acid//benzyl methacrylate//ethyltriethyleneglycol methacrylate (13//15//4) prepared in a manner similar to "preparation 4" described in U.S. Patent No. 5,519,085, except the monomer levels were adjusted to give the ratio indicated. The neutralizing agent was potassium hydroxide providing the potassium salt form of the polymer. The number average molecular weight was about 5,000 and weight average molecular weight was about 6,000 g/mol. The final aqueous solution contained 15 weight percent polymer solids.

Optical Density (OD)

Inks were printed with a Canon i560 printer onto HP office, Xerox 4024 and Hammermill Copy Plus plain papers. The reported optical density (OD) values were of areas printed at 100% coverage, measured with a Greytag Macbeth Spectrolino spectrometer. The reported average OD is the average of the three papers.

Evaluation of Bleed and Feathering

Two test patterns were made on the same sheet of paper. In the first pattern a solid horizontal black line about 400 microns wide was made on the white paper without any abutting color (referred to as black on white and abbreviated K/W). In the second pattern, a similar horizontal black line abuts, on both the upper and lower edges, a solid block of yellow color (referred to as black on yellow and abbreviated K/Y).

The edge acuity of the black line in each of the two patterns was then assessed by image analysis under a microscope. A monochrome CCD camera coupled to a microscope captured a digital photomicrograph of the line. The borders of the upper and lower edges were determined by analysis of the threshold reflectivity values. The points in each border were used to calculate a straight line representing the least squares best fit of the line edge. For each edge the root mean square deviation (RMSD) of the points in the border was calculated (in units of microns, $\mu$) relative to the least squares best fit straight line. The quantity and location of points sampled on a given sheet was sufficient to assure the analysis of line edges was statistically significant.

The RMSD is related the perception of line edge acuity. A line with a small RMSD appears sharp upon visual inspection, whereas a line with a large RMSD appears "fuzzy" or "ragged". The method objectively quantitates the relative sharpness (or raggedness) of a line printed under different conditions.

The unevenness in K/W line edge (RMSD K/W) is referred to as "feathering" as there is no abutting color. The unevenness of the K/Y line edge (RMSD K/Y), is a combination of feathering and "bleed" of the black color into the yellow. Thus "bleed", as referred to herein, is quantified as RMSD K/Y minus RMSD K/W and is seen as the increase in RMSD of K/Y over K/W.

The test patterns were printed with a Canon PIXMA 4200 printer (standard mode) on Canon Office plain paper. The black inks used are described in the examples. The yellow ink used to make the yellow blocks of color was the Canon CLi-8Y commercial ink made for the PIXMA 4200 printer.

The RMSD may vary greatly from one brand of paper to another. Sometimes, there is substantial variation even in the same brand from one ream of paper to another. Day to day environmental differences (e.g. temperature, humidity) can also cause variability. In an effort to minimize such variability, all tests in a given series are run on the same day with paper from the same ream and reported results are an average of test patterns on three different sheets of paper.

Cation Analytical Method

Prior to analysis, the pigment was removed by precipitation with added hydrochloric acid. The precipitated pigment was separated by ultracentrifugation and the resulting clear supernatant was analyzed for the cations by inductively coupled plasma optical emission spectroscopy (ICP/OES) using PE Optima instrumentation (Perkin Elmer Life and Analytical Sciences, Shelton, Conn.).

Cation levels in inks were reported on a molar basis as micromoles ($\mu$mol) of cation per gram of SDP (g-SDP). A micromole is $10^{-6}$ moles. The calculation for $\mu$mol of cation per g-SDP is (100)(cation ppm) / (wt% SDP)(cation molecular weight).

Latency Test

Latency (decap time) was determined according to the following procedure using a Hewlett Packard 850 printer that was altered so that the ink cartridge would not be serviced during the test. Just prior to the beginning of the test, the nozzles were primed and a nozzle check pattern was performed to ensure all nozzles were firing acceptably. No further servicing was then conducted

During each scan across the page, the pen prints a pattern of 149 vertical lines spaced about 1/16 inch apart. Each vertical line is formed by all nozzles firing one drop, therefore the line is one drop wide and about ½ inch high corresponding to the length of the nozzle array on the printhead. The first vertical line in each scan is the first drop fired from each nozzle after the prescribed latency period, the fifth line was the fifth drop from each nozzle on that scan, and so forth for all 149 lines.

The pattern was repeated at increasingly longer time intervals (decap times) between scans. The standard time intervals between scans was 1, 2, 3, 4, 5, 6, 7, 8, 9, 10, 20, 30, 40, 50, 60, 70, 80, 90 100, 200, 300, 400, 500, 600, 700, 800, 900, and 1000 seconds. Nothing beyond 1000 seconds was attempted.

Upon completion of the test, the 1st, 5th, and 32nd vertical lines in each scan was examined for consistency, misdirected drop deposits, and clarity of the print. These lines correspond to the 1st, 5th and 32nd drops of ink droplets ejected from the nozzle after a prescribed latency period. The decap time was the longest time interval where the particular vertical line can be printed without significant defects.

Preferably, the pen will fire properly on the first drop. However, when the first drop fails to eject properly, the decap time for the fifth and thirty-second drops can provide some information as to the severity of the pluggage and how easily the nozzles can be recovered.

The results tables hereinafter report only the first drop decap time and refer to the value simply as the "Decap Time" in units of seconds.

Example 1 (Comparative)

The inks in this example, summarized in the tables below, are comparative and demonstrate the problem of formulating SDP in lithium form (Li-SDP) compared to potassium form (K-SDP).

A range of common humectants can be used with K-SDP (Inks 1 B-1 H), to increase the decap time relative to water only (ink 1A) and provide adequate decap time for commercial operation. In contrast, a similar range of humectants used with Li-SDP (inks 1J-1O) fails to give the same sort of decap improvement relative to water only (ink 1I) and this property of Li-SDP ink tends to make it difficult to use commercially, even though jettable under the controlled test conditions herein. Generally it is necessary to have a minimum decap time, as measured by this test method, of at least at least 30 to 60 seconds, although longer is preferred.

| Ingredient | Ink 1A | Ink 1B | Ink 1C | Ink 1D | Ink 1E | Ink 1F | Ink 1G | Ink 1H |
|---|---|---|---|---|---|---|---|---|
| Dispersion 3 (K) (as % pigment) | 3.5 | 3.5 | 3.5 | 3.5 | 3.5 | 3.5 | 3.5 | --- |
| Dispersion 2 (K) (as % pigment) | --- | --- | --- | --- | --- | --- | --- | 3.5 |
| Diethylene glycol | --- | 20 | --- | --- | 5.0 | 7.0 | -- | 10 |
| 2-Pyrrolidone | --- | --- | 20.0 | --- | --- | 10.0 | 10 | 10 |
| Urea | --- | --- | --- | 15.0 | 10.0 | --- | 10 | --- |
| Surfynol® 465 | 0.2 | 0.2 | 0.2 | 0.2 | 0.2 | 0.2 | 0.2 | 0.2 |
| Water (Balance to 100) | Bal. | Bal. | Bal. | Bal. | Bal. | Bal. | Bal. | Bal. |
| _Print Properties_ | | | | | | | | |
| Decap Time (sec.) | 5 | 100 | 90 | 70 | 100 | 60 | 50 | 60 |

| Ingredient | Ink 1I | Ink 1J | Ink 1K | Ink 1L | Ink 1M | Ink 1N | Ink 1O |
|---|---|---|---|---|---|---|---|
| Dispersion 1 (Li) (as % pigment) | 3.5 | 3.5 | 3.5 | 3.5 | 3.5 | 3.5 | 3.5 |
| Diethylene glycol | ---- | ---- | ---- | 10.0 | ---- | ---- | 10 |
| 2-pyrrolidone | ---- | 20.0 | ---- | ---- | ---- | ---- | 10 |
| Urea | ---- | ---- | 20.0 | 10.0 | ---- | ---- | --- |
| Glycerol | ---- | ---- | ---- | ---- | 20.0 | ---- | --- |
| Glycereth-26 | ---- | ---- | ---- | ---- | ---- | 15.0 | --- |
| Surfynol® 465 | 0.2 | 0.2 | 0.2 | 0.2 | 0.2 | 0.2 | 0.2 |
| Water (Balance to 100) | Bal. | Bal. | Bal. | Bal. | Bal. | Bal. | Bal. |
| _Print Properties_ | | | | | | | |
| Decap Time (sec.) | 5 | 5 | 6 | 20 | 10 | 4 | 10 |

Example 2

This inks of this example, summarized in the tables below, demonstrate that caprolactam can be used as the sole humectant to greatly increase decap time. In these examples, with no other humectant present, the level of caprolactam needed to effect an increase In decap was greater than 5 weight percent based on the total weight of Ink.

| Ingredient | Ink 2A | Ink 2B | Ink 2C | Ink 2D |
|---|---|---|---|---|
| Dispersion 1 (Li) (as % pigment) | 3.5 | 3.5 | 3.5 | 3.5 |
| Caprolactam | 5.0 | 7.5 | 10.0 | 15.0 |
| Surfynol® 465 | 0.2 | 0.2 | 0.2 | 0.2 |
| Water (Balance to 100) | Bal. | Bal. | Bal. | Bal. |
| Print Properties | | | | |
| Decap Time (sec.) | 5 | 60 | 400 | 300 |
| OD Hammermill CopyPlus | 1.44 | 1.37 | 1.37 | 1.33 |
| OD HP Office | 1.42 | 1.35 | 1.29 | 1.31 |
| OD Xerox 4024 | 1.43 | 1.38 | 1.38 | 1.34 |
| Average OD | 1.43 | 1.37 | 1.35 | 1.33 |

Example 3

The inks of this example, summarized in the tables below, demonstrate the use of caprolactam as a first humectant and diethylene glycol as a second humectant. In these examples, the combination of diethylene glycol and caprolactam achieves a longer decap than the caprolactam alone In the previous example. Also, in combination, less caprolactam was needed. There appeared to be a sharp drop in decap at levels of 4% caprolactam and lower, although these formulations are not necessarily optimized in regard to selection and ratio of second humectant(s).

Further demonstrated in this example is that the Influence of caprolactam on decap seems to be particular to Li-SDP. Comparative ink 3I uses K-SDP in place of the Li-SDP in inventive Ink 3C and results show the decap time of ink 3I is similar to and no better than the other K-SDP inks (1 B-1 H), In the first example.

| Ingredient | Ink 3A | Ink 3B | Ink 3C | Ink 3D | Ink 3E |
|---|---|---|---|---|---|
| Dispersion 1 (Li) (as % pigment) | 3.5 | 3.5 | 3.5 | 3.5 | 3.5 |
| Diethylene glycol | 2.0 | 5.0 | 10.0 | 12.5 | 15.0 |
| Caprolactam | 18.0 | 15.0 | 10.0 | 7.5 | 5.0 |
| Surfynol® 465 | 0.2 | 0.2 | 0.2 | 0.2 | 0.2 |
| Water (Balance to 100) | Bal. | Bal. | Bal. | Bal. | Bal. |
| Print Properties | | | | | |
| Decap Time (sec.) | 600 | 200 | 900 | 700 | 500 |
| OD Hammermill Copy Plus | 1.34 | 1.32 | 1.36 | 1.36 | 1.37 |
| OD HP Office | 1.26 | 1.26 | 1.30 | 1.35 | 1.31 |
| OD Xerox 4024 | 1.39 | 1.31 | 1.35 | 1.36 | 1.39 |
| Average OD | 1.33 | 1.30 | 1.34 | 1.36 | 1.36 |

| Ingredient | Ink 3F | Ink 3G | Ink 3H Comp. | Ink 3I Comp. |
|---|---|---|---|---|
| Dispersion 1 (Li) (as % pigment) | 3.5 | 3.5 | 3.5 | ---- |
| Dispersion 2 (K) (as % pigment) | ---- | ---- | ---- | 3.5 |
| Diethylene glycol | 16.0 | 18 | 20 | 10 |
| Caprolactam | 4.0 | 2.0 | ---- | 10 |
| Surfynol® 465 | 0.3 | 0.3 | 0.2 | 0.2 |
| Water (Balance to 100) | Bal. | Bal. | Bal. | Bal. |

(continued)

| Print Properties | | | | |
|---|---|---|---|---|
| Decap Time (sec.) | 8 | 6 | 6 | 60 |
| OD Hammermill Copy Plus | 1.37 | 1.37 | 1.44 | 1.37 |
| OD HP Office | 1.31 | 1.30 | 1.31 | 1.24 |
| OD Xerox 4024 | 1.36 | 1.41 | 1.39 | 1.31 |
| Average OD | 1.35 | 1.36 | 1.38 | 1.31 |

Example 4 (Comparative)

The inks of this example, summarized in the tables below, are comparative and demonstrate that valerolactam and caprolactone, although similar in chemical structure to caprolactam, do not give long decap time with Li-SDP when used alone as the sole humectant or in combination with diethylene glycol. Results show the decap times for comparative inks 4A-4F are similar to the comparative Li-SDP inks (1I-1O) in the first example.

| Ingredient | Ink 4A | Ink 4B |
|---|---|---|
| Dispersion 1 (Li) (as % pigment) | 3.5 | 3.5 |
| Diethylene glycol | -- | 10.0 |
| delta-Valerolactam | 20.0 | 10.0 |
| Surfynol® 465 | 0.2 | 0.2 |
| Water (Balance to 100) | Bal. | Bal. |
| Print Properties | | |
| Decap Time (sec.) | 5 | 10 |
| OD Hammermill Copy Plus | 1.33 | 1.34 |
| OD HP Office | 1.27 | 1.33 |
| OD Xerox 4024 | 1.32 | 1.36 |
| OD (Average) | 1.31 | 1.34 |

| Ingredient | Ink 4C | Ink 4D | Ink 4E | Ink 4F |
|---|---|---|---|---|
| Dispersion 1 (as % pigment) | 3.5 | 3.5 | 3.5 | 3.5 |
| Diethylene glycol | ---- | 12.5 | 10.0 | 7.5 |
| Caprolactone | 20.0 | 7.5 | 10.0 | 12.5 |
| Surfynol® 465 | 0.2 | 0.2 | 0.2 | 0.2 |
| Water (Balance to 100) | Bal. | Bal. | Bal. | Bal. |
| Print Properties | | | | |
| Decap Time (sec.) | 5 | 6 | 7 | 20 |
| OD, Hammermill CopyPlus | 1.42 | 1.45 | 1.47 | 1.44 |
| OD, HP Office | 1.33 | 1.35 | 1.34 | 1.35 |
| OD, Xerox 4024 | 1.34 | 1.42 | 1.40 | 1.36 |
| OD (Average) | 1.36 | 1.41 | 1.40 | 1.38 |

Example 5

The inks of this example, summarized in the tables below, demonstrate that inks with Li-SDP can have certain benefits compared to inks with other forms of the same pigment dispersion. Results show that ink 5B with Li-SDP has better optical density and bleed than a similar ink (ink 5A) with the same SDP in sodium form, although the decap of ink 5B is low. Formulation of the same Li-SDP with caprolactam (ink 5C) provides acceptable decap without loss of OD while further improving bleed.

| Ingredient | Ink 5A Comp. | Ink 5B Comp. | Ink 5C |
|---|---|---|---|
| Dispersion 4 (Na) (as % pigment) | 3.5 | ---- | ---- |
| Dispersion 5 (Li) (as % pigment) | ---- | 3.5 | 3.5 |
| Diethylene glycol | 10.0 | 10.0 | 10.0 |
| 2-Pyrrolidone | 10.0 | 10.0 | ---- |
| Caprolactam | ---- | ---- | 10.0 |
| Surfynol® 465 | 0.2 | 0.2 | 0.2 |
| Water (Balance to 100) | Bal. | Bal. | Bal. |
| Print Properties | | | |
| Decap Time (sec.) | 70 | 5 | 100 |
| OD Hammermill CopyPlus | 1.02 | 1.03 | 1.14 |
| OD HP Office | 1.20 | 1.24 | 1.08 |
| OD Xerox 4024 | 1.00 | 1.13 | 1.16 |
| Plain Paper OD | 1.07 | 1.13 | 1.13 |
| RMSD K/Y ($\mu$) | 59 | 46 | 13 |
| RMSD K/W ($\mu$) (Feathering) | 13 | 8 | 13 |
| Bleed ($\mu$) | 46 | 38 | 0 |

Example 6

The inks of this example, summarized in the tables below, demonstrate the use of caprolactam with various second humectants. Again, as with diethylene glycol in example 3, caprolactam can be used effectively in combination with other humectants to achieve long decap, although some optimization is necessary.

| Ingredient | Ink 6A | Ink 6B | Ink 6C |
|---|---|---|---|
| Dispersion 1 (Li) (as % pigment) | 3.5 | 3.5 | 3.5 |
| Ethylene glycol | 10.0 | ---- | ---- |
| Triethylene glycol | ---- | 10 | ---- |
| Glycerol | ---- | ---- | 10.0 |
| Caprolactam | 10.0 | 10.0 | 10.0 |
| Surfynol® 465 | 0.2 | 0.2 | 0.2 |
| Water (Balance to 100) | Bal. | Bal. | Bal. |
| Print Properties | | | |
| Decap Time (sec.) | 500 | 500 | 900 |
| OD Hammermill Copy Plus | 1.37 | 1.44 | 1.40 |
| OD HP Office | 1.29 | 1.29 | 1.28 |
| OD Xerox 4024 | 1.36 | 1.38 | 1.35 |
| Average OD | 1.34 | 1.37 | 1.34 |

| Ingredient | Ink 6D | Ink 6E | Ink 6F |
|---|---|---|---|
| Dispersion 1 (Li) (as % pigment) | 3.5 | 3.5 | 3.5 |
| Glycereth-26 | 10.0 | -- | -- |
| 1,4-butanediol | -- | 10.0 | -- |
| 1,5-pentanediol | -- | -- | 10.0 |
| Caprolactam | 10.0 | 10.0 | 10.0 |
| Surfynol® 465 | 0.2 | 0.2 | 0.2 |
| Water (Balance to 100) | Bal. | Bal. | Bal. |

(continued)

| Print Properties | | | |
|---|---|---|---|
| Decap Time (sec.) | 50 | 20 | 40 |
| OD Hammermill Copy Plus | 1.45 | 1.42 | 1.43 |
| OD HP Office | 1.24 | 1.29 | 1.25 |
| OD Xerox 4024 | 1.33 | 1.37 | 1.39 |
| Average OD | 1.34 | 1.36 | 1.36 |

| Ingredient | Ink 6G | Ink 6H |
|---|---|---|
| Dispersion 1 (Li) (as % pigment) | 3.5 | 3.5 |
| Glycereth-26 | 4.25 | 4.25 |
| 1,5-pentanediol | 5.0 | -- |
| 2-Pyrrolione | 6.0 | 6.0 |
| Caprolactam | 5.0 | 10.0 |
| Surfynol® 465 | 0.1 | 0.1 |
| Water (Balance to 100) | Bal. | Bal. |
| Print Properties | | |
| Decap Time (sec.) | 300 | 700 |
| OD Hammermill Copy Plus | 1.36 | 1.36 |
| OD HP Office | 1.33 | 1.28 |
| OD Xerox 4024 | 1.39 | 1.41 |
| Average OD | 1.33 | 1.35 |

Example 7

The inks of this example, summarized in the tables below, demonstrate the use of a polymer additive in an aqueous ink with Li-SDP, caprolactam, and a second humectant. The polymer in this case is an anionic polymer with potassium counter-ions. Results show that long decap times are again achieved.

| Ingredients | Ink 7A | Ink 7B | Ink 7C |
|---|---|---|---|
| Dispersion 1 (Li) (as % pigment) | 3.5 | 3.5 | 3.5 |
| Polymer 1 | 0.15 | 0.25 | 0.5 |
| Diethylene glycol | 10.0 | 10.0 | 10.0 |
| Caprolactam | 10.0 | 10.0 | 10.0 |
| Surfynol® 465 | 0.2 | 0.2 | 0.2 |
| Water (Balance to 100) | Bal. | Bal. | Bal. |
| Print Properties | | | |
| Decap Time (sec.) | 200 | 900 | 300 |
| OD Hammermill Copy Plus | 1.38 | 1.41 | 1.37 |
| OD HP Office | 1.32 | 1.30 | 1.28 |
| OD Xerox 4024 | 1.31 | 1.30 | 1.27 |
| Average OD | 1.34 | 1.34 | 1.31 |

The alkali metal cation content of the inks is summarized in the following table. The M1/Mtot ratio is the molar ratio of Li to total alkali metal molar content of the ink percent, expressed as percent.

| Ion Content | Ink 7A | Ink 7B | Ink 7C |
|---|---|---|---|
| Lithium ($\mu$mol/g-Pigment) | 280 | 290 | 285 |

(continued)

| Ion Content | Ink 7A | Ink 7B | Ink 7C |
|---|---|---|---|
| Sodium ($\mu$mol/g-Pigment) | 12 | 16 | 12 |
| Potassium ($\mu$mol/g-Pigment) | 150 | 231 | 460 |
| Mtot ($\mu$mol/g-Pigment) | 442 | 537 | 757 |
| Ratio (%) M1/Mtot | 63 | 54 | 38 |

## Claims

1. An inkjet ink comprising an aqueous vehicle, a colorant, and a cationic species wherein:

   i) said aqueous vehicle comprises water and a humectant consisting of caprolactam and optionally a second humectant selected from any member or combination of members of the group consisting of ethylene glycol, diethylene glycol, triethylene glycol, glycerol, ethoxylated glycerol, 1 ,4- butanediol, 1 ,5-pentanediol and 2-pyrrolidone;
   ii) said colorant comprises self-dispersed pigment with carboxylate or sulfonate anionic dispersibility-imparting surface groups; and,
   iii) said cationic species consists predominantly of $Li^+$ wherein the molar concentration of $Li^+$ per unit weight of Ink is M1, the total molar concentration of alkali metals per unit weight of ink Is Mtot, and M1 and Mtot satisfy the equation M1 $\geq$ 0.5 Mtot.

2. The inkjet ink of claim 1 wherein the molar concentration of $Li^+$ per unit weight of ink is M1, the molar concentration of said anionic dispersibility-imparting surface groups on the self dispersing pigment per unit weight of ink is M_anionic, and M1 and M_anionic satisfy equation 1 as follows:

$$M1 \geq 0.5\ M\_anionic \qquad (1).$$

3. The inkjet ink according to claims 1 or 2 wherein said anionic dispersibility-imparting surface groups on the self-dispersed pigment are predominately carboxylate groups.

4. The inkjet Ink of claim 1 further comprising an anionic polymer additive.

5. The inkjet ink of claim 1 wherein the anionic polymer additive is an anionic acrylic, styrene-acrylic or polyurethane polymer additive.

6. The inkjet ink of claim 1 wherein the amount of caprolactam is in the range of 4 weight % to 25 weight % based on the total weight of ink.

7. The inkjet ink of claim 1 wherein the colorant consists essentially of self-dispersed pigment with said anionic dispersibility-imparting surface groups.

## Patentansprüche

1. Tintenstrahltinte umfassend ein wässriges Vehikel, ein Farbmittel und eine kationische Spezies, wobei

   i) das wässrige Vehikel Wasser und ein Feuchthaltemittel, das aus Caprolactam besteht, und wahlweise ein zweites Feuchthaltemittel umfasst ausgewählt unter irgendeinem Mitglied oder einer Kombination von Mitgliedern der Gruppe bestehend aus Ethylenglykol, Diethylenglykol, Triethylenglykol, Glycerin, ethoxyliertem Glycerin, 1,4-Butandiol, 1,5-Pentandiol und 2-Pyrrolidon;
   ii) das Farbmittel selbstdispergiertes Pigment mit anionischen, dispersibilitätsverleihenden Carboxylat- oder Sulfonat-Oberflächengruppen umfasst; und
   iii) die kationische Spezies hauptsächlich aus $Li^+$ besteht, wobei die molare Konzentration von $Li^+$ pro Einheitsgewicht Tinte M1 ist, die gesamte molare Konzentration von alkalimetallen pro Einheitsgewicht Tinte Mges ist und M1 und Mges der Gleichung M1≥ 0,5 Mges entsprechen.

2.  Tintenstrahltinte nach Anspruch 1, wobei die molare Konzentration von Li$^+$ pro Einheitsgewicht Tinte M1 ist, die molare Konzentration der anionischen, dispersibilitätsverleihenden Oberflächengruppen an dem selbstdispergierenden Pigment pro Einheitsgewicht Tinte M_anionisch ist und M1 und M_anionisch der folgenden Gleichung entsprechen:

$$M1 \geq 0{,}5 \ M\_anionisch \quad (1).$$

3.  Tintenstrahltinte nach Anspruch 1 oder 2, wobei die anionischen, dispersibilitätsverleihenden Oberflächengruppen an dem selbstdispergierten Pigment hauptsächlich Carboxylatgruppen sind.

4.  Tintenstrahltinte nach Anspruch 1, des Weiteren ein anionisches Polymerzusatzmittel umfassend.

5.  Tintenstrahltinte nach Anspruch 1, wobei das anionische Polymerzusatzmittel ein anionisches Acryl-, Styrol-Acryl- oder Polyurethanpolymerzusatzmittel ist.

6.  Tintenstrahltinte nach Anspruch 1, wobei die Menge an Caprolactam im Bereich von 4 Gew.-% bis 25 Gew.-%, auf das Gesamtgewicht der Tinte bezogen, liegt.

7.  Tintenstrahltinte nach Anspruch 1, wobei das Farbmittel im Wesentlichen aus selbstdispergiertem Pigment mit den anionischen dispersibilitätsverleihenden Oberflächengruppen besteht.

## Revendications

1.  Encre pour jet d'encre comprenant un véhicule aqueux, un colorant et une espèce cationique dans laquelle:

    i) ledit véhicule aqueux comprend de l'eau et un humectant constitué de caprolactame et éventuellement un second humectant sélectionné parmi n'importe quel membre ou combinaison de membres du groupe constitué de l'éthylène glycol, du diéthylène glycol, du triéthylène glycol, du glycérol, du glycérol éthoxylé, du 1,4-butanediol, du 1,5-pentanediol et de la 2-pyrrolidone;
    ii) ledit colorant comprend un pigment à auto-dispersion avec des groupes anioniques de type carboxylate ou sulfonate à caractère tensioactif conférant la dispersibilité ; et,
    iii) ladite espèce cationique est constituée de manière prédominante de Li$^+$ dans laquelle la concentration molaire de Li$^+$ par poids unitaire de l'encre est M1, la concentration molaire totale des métaux alcalins par poids unitaire de l'encre est Mtot, et M1 et Mtot satisfont l'équation M1 ≥ 0,5 Mtot.

2.  Encre pour jet d'encre selon la revendication 1, dans laquelle la concentration molaire de Li$^+$ par poids unitaire de l'encre est M1, la concentration molaire desdits groupes anioniques à caractère tensioactif conférant la dispersibilité sur le pigment à auto-dispersion par poids unitaire de l'encre est M_anionique, et M1 et M_anionique satisfont l'équation 1 comme suit:

$$M1 \geq 0{,}5 \ M\_anionique \qquad (1).$$

3.  Encre pour jet d'encre selon les revendications 1 ou 2, dans laquelle lesdits groupes anioniques à caractère tensioactif conférant la dispersibilité sur le pigment à auto-dispersion sont de manière prédominante des groupes carboxylate.

4.  Encre pour jet d'encre selon la revendication 1, comprenant en outre un additif polymère anionique.

5.  Encre pour jet d'encre selon la revendication 1, dans laquelle l'additif polymère anionique est un additif polymère anionique acrylique, styrène-acrylique ou polyuréthane.

6.  Encre pour jet d'encre selon la revendication 1, dans laquelle la quantité de caprolactame est située dans la plage de 4 % en poids à 25 % en poids sur la base du poids total de l'encre.

**7.** Encre pour jet d'encre selon la revendication 1, dans laquelle le colorant est essentiellement constitué de pigment à auto-dispersion avec lesdits groupes anioniques à caractère tensioactif conférant la dispersibilité.

## REFERENCES CITED IN THE DESCRIPTION

**Patent documents cited in the description**

- US 00848807 P
- US 20050032930 A
- US 20050020730 A
- US 20040233263 A
- US 20050087105 A
- US 20070146454 A
- US 20090020037 A
- US 6069190 A
- US 20070040880 A
- EP 1473338 A
- JP 2006247971 A
- JP 2006137072 A
- JP 2005144905 A
- JP 2004195706 A
- JP 2004043518 A
- US 5571311 A
- US 5609671 A
- US 5968243 A
- US 5928419 A
- US 6323257 A
- US 5554739 A
- US 5672198 A
- US 5698016 A
- US 5718746 A
- US 5749950 A
- US 5803959 A
- US 5837045 A
- US 5846307 A
- US 5895522 A
- US 5922118 A
- US 6123759 A
- US 6221142 A
- US 6221143 A
- US 6281267 A
- US 6329446 A
- US 6332919 A
- US 6375317 A
- US 6287374 A
- US 6398858 A
- US 6402825 A
- US 6468342 A
- US 6503311 A
- US 6506245 A
- US 6852156 A
- US 6852156 B
- US 5519085 A